# EUROPEAN PATENT SPECIFICATION

(11) **EP 1 780 994 B1**
(45) Date of publication and mention of the grant of the patent: **08.03.2017**
(21) Application number: 06022409.4
(22) Date of filing: 26.10.2006
(51) Int. Cl.: H04M 1/247, H04M 1/02, H04M 1/725

(54) **MOBILE TERMINAL WITH A PLURALITY OF INPUT UNITS**
MOBILES ENDGERÄT MIT MEHREREN EINGABEEINHEITEN
TERMINAL MOBILE AVEC PLUSIEURS UNITÉS D'ENTRÉE

(30) Priority: 28.10.2005 KR 20050102632
(43) Date of publication of application: 02.05.2007
(73) Proprietor: LG Electronics Inc., Yeongdeungpo-gu Seoul 150-721 (KR)
(72) Inventor: Lee, Sang Hyuck, Gwanak-gu, Seoul (KR); Park, Yeon Woo, Seocho-gu, Seoul (KR); Kim, Hyun Ho, Dongjak-gu, Seoul (KR)
(74) Representative: von Hellfeld, Axel

(56) References cited:
- EP-A- 0 898 405
- EP-A- 1 583 330
- EP-A- 1 643 732
- WO-A-2005/015885
- WO-A-2005/071926
- US-A- 6 118 480
- US-A1- 2004 021 681
- US-A1- 2004 266 477
- US-A1- 2005 083 642
- US-A1- 2005 207 726
- US-B2- 7 218 313

## Description

### FIELD OF THE INVENTION

The present invention relates to a mobile terminal having a plurality of input units that may receive two or more signal inputs.

### DESCRIPTION OF THE RELATED ART

Many mobile terminals, such as mobile phones, personal digital assistants (PDAs), smart handheld devices and MP3 players have become an indispensable part of our daily lives. Mobile terminal technology has also undergone tremendous advancement. Mobile terminals are typically small enough to be clipped to a belt or other article of clothing or to be stored in a pocket, briefcase or purse.

Some mobile terminals provide telecommunication functions. Some mobile terminals also provide primitive calendar, contact/address book, and/or email functions. Various functions, such as generating background music, a digital camera, a TV, a camcorder, a game, and wireless Internet access have been added to some mobile terminals. As functions were added to mobile terminals, menus for selecting the various functions have also increased and the directory structure of the menus has become complicated.

As mobile terminals have become an indispensable part of the daily lives of their users, they often store personal information, such as a telephone directory and a time schedule in the memory. This information is closely connected with the lives of their users.

As the character input or the menu selection has increased for mobile terminals, there is a greater necessity for effectively displaying the results and simplifying the character input or menu selection procedures.

Mobile terminals use various input units, such as a keypad, a joystick, a jog dial, and a navigation key, in order to input characters or perform menu selection. However, these input units are not efficient for the increased character input or menu selection.

Mobile terminals having conventional input units are often very complicated and require much time for selecting a menu or a mode corresponding to the various functions. Furthermore, because it is impossible to select the menu or the mode and input information when a cover of the mobile terminal is closed, the cover must be opened for performing such simple functions, thereby adding to user inconvenience.

EP 1 583 330 A2 relates to a mobile electronic equipment in which an upper cabinet is openably and closably coupled with a lower cabinet, cutout portions from which a track ball is exposed are formed to the coupling portions of the upper and lower cabinets, and the track ball is interposed between a pair of hinge mechanisms for connecting both the cabinets to each other. With this arrangement, since the track ball is exposed in any of the opened state and the closed state of the mobile electronic equipment, a user can manipulate the track ball in any of the opened state and the closed state. Accordingly, there can be overcome the disadvantageous operability of a conventional folding type mobile electronic equipment, which has a track ball as a pointing device, in that a job for opening the equipment is required to manipulate the track ball.

WO 2005/071926 A1 refers to a folding electronic device operable without losing a balance at the gravity center of an entire casing even if the attitude of the casing is rotated for use so that image information can be easily observed and capable of preventing an erroneous operation in the standby state. In a cellular phone having an upper casing with a display part on the principal plane thereof, a lower casing with a first operation part on the principal plane thereof, and a hinge part rotatably connecting the first casing to the second casing, a second operating part rotated according to the opening/closing operations of the hinge part and concealed between the casings when the upper and lower casings are folded and exposed to the outside when the upper casing is opened is formed at the hinge part.

EP 0 898 405 A2 relates to an information communication terminal device, wherein an upper case and a lower case are rotatably connected in a connection part. The connection part is constructed by a rotary shaft supporting part integrated in the lower case, a rotary shaft which is integrated in the upper case and a part of which is rotatably fit into the rotary shaft supporting part, and a housing member having a part rotatably fit into the rotary shaft supporting part. A video camera and a camera lens are housed in the housing member. A display/operation part is provided almost in the whole upper case and a display/operation part is provided almost in the whole lower case. In the display/operation parts, in addition to camera images of the video camera, a reception image, and various data, touch-type operation buttons are displayed. The display/operation parts have the functions as the operation part as well as the display part. "Recording" mode, "transmission/reception" mode, and "information acquisition" mode can be selectively set and the device can be used according to the mode.

US 2005/0083642 A1 refers to a mobile communications device including a first display device and a second display device. The second display device is arranged on, and is moveable with respect to, a casing, and movement of the second display device is detected by a sensor. Moreover, the mobile communications device may include a control device for executing application programs, and when the second display device is moved, automatically updates display content on the first display device or the second display device in cooperation with the movement. When the second display device changes from closed status to open status, the control device automatically selects content related to content on the first display device and displays it on the second display device.

WO 2005/015885 A2 refers to a portable electronic device that is provided with at least one first user input unit positioned in a hinging section so that the size of the portable electronic device can be reduced.

EP 1 643 732 A2 (published on 5 April 2006) relates to a mobile communication terminal with dedicated keys for controlling an integrated functional component such as an audio player, in which the dedicated keys are situated at convenient positions for use. The mobile communication terminal includes a housing that accommodates parts which enable wireless communications with an external device and has an audio player therein. The terminal includes a control key assembly positioned on at least one lateral side of the housing to enable a user to operate the audio player. The position of the control key assembly assists the user in pressing the keys using his thumb, forefinger, middle finger and third finger. The position of the control key assembly also enables a wide auxiliary display to be positioned on the upper surface of the housing, e.g., on the outer surface of the upper housing.

US 2004/0021681 A1 discloses a dual-touch-screen mobile computer adapted to receive input information by touching a surface of a main screen or a surface of a sub-screen of such mobile computer is provided. The dual-touch-screen mobile computer is essentially a system with a computer module for performing various computer data processing tasks and an embedded system module for performing various embedded system tasks. The dual-touch-screen mobile computer comprises a main screen portion having a main screen mounted on the surface thereof and the computer module mounted within the main screen portion. The dual-touch-screen mobile computer also comprises a sub-screen portion pivotally coupled to the main screen portion and having a sub-screen mounted on the surface thereof and the embedded system module mounted within the sub-screen portion. Both the main screen and the sub-screen are touch-screen type flat panel display screens, thereby allowing a user to input data or commands into the dual-touch-screen mobile computer by physically touching the surface of the main screen or the surface of the sub-screen. The embedded system module is adapted to display a computer input user interface, such as a virtual keyboard, a virtual handwriting board, or a virtual notepad, and an embedded system user interface, such as a PDA interface, a smart phone interface, or a pager interface, on the sub-screen. The dual-touch-screen mobile computer further comprises a mobile phone telecommunication module, an IEEE 802.11 wireless network module, a pager module, a Bluetooth wireless network module, a 10/100 Ethernet module, and a memory card reader. The embedded system module and the computer module have separate battery sets to allow the embedded system module and the computer module to be operated independently.

US 7,218,313 B2 discloses a human interface configured to optimize a biomechanical effect of a human user's opposing thumb and fingers by including, on one surface, one or more software configurable input elements manipulatable by a user's thumb(s) or a stylus, and, on another surface, one or more software configurable selection elements manipulatable by a user's finger(s). A selection element may be a pressure sensor pad configurable to represent delineated active areas that are mapped to one or more input functions. Shape changing media may be provided to permit a user to tactilely discriminate between delineated active areas. Tactile feedback may be provided to a user through palpable detents, vibratory or force producing units.; Inputting data may include mapping each selection element to a shift function, mapping each input element to text functions, and using the selection elements to shift between text functions associated with an input element to input a desired text function.

US 2004/0266477 A1 relates to a handheld electronic apparatus, which allows the user to photograph an object while watching an image of the object on it display unit. A first case having the display unit and a second case having a key input section are connected in an openable and closable manner by means of a connecting shaft, which has a built-in image pick-up unit. When the first case and the second case are kept in an open state, the display unit on the first case and the key input section face in the same direction, and the image pick-up unit faces in the opposite direction to a display screen of the display unit and the key input section. The user can photograph the object, while reviewing the image of the object displayed on the display unit.

US 6,118,480 discloses a method and apparatus for integrating a user interface across multiple operating modes of a digital camera including a display. When the digital camera is placed into each one of the multiple operating modes, mode-specific items corresponding to that mode are displayed on the display. The digital camera includes a first button and a second button for interacting with the multiple operating modes, where the first button has a first orientation, and the second button has a second orientation. The method and apparatus includes mapping an aligned set of mode-specific items in the display to the orientation of the first button. After the mode-specific items are displayed, the user scrolls from one mode-specific item to the next in the aligned set by pressing the first button and the display indicates which of the mode-specific items is a currently active item. When a mode-specific item becomes the active item, additional information corresponding to the currently active item is displayed in the display in a location offset from the active item in a direction of orientation corresponding to that of the second button.

US 2005/0207726 A1 discloses a portable audio video electronic recording, storage and playback device. A user can store their music or movies and view them on the built-in color display or on a television. Video can be recorded and stored from any video source. Digital photographs or video can be captured via a built-in camera. A built-in TV tuner provides viewing and recording of television programming. Music can also be recorded from a stereo or computer and played back anytime and anywhere. The audio can be listened to with headphones, with the built-in speaker, or by connecting the device to a stereo. An image viewer allows digital photos to be stored and viewed on the device. Images can be easily transferred between the device, digital cameras and computers. A hard disc drive and memory card port are provided for storing data. An infrared port provides remote control and wireless connectivity.

### SUMMARY

Features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

An object of the present invention is to solve at least the problems and disadvantages of the related art. Another object of the present invention is to provide a mobile communication terminal equipped with a plurality of multi-input units that may quickly, easily and simply select a desired menu or mode.

The present invention is defined by independent claim 1. Specified embodiments are defined by the dependent claims.

In one aspect of the present invention, a mobile communication terminal is provided. The mobile communication terminal includes a body, a first multi-input unit and a second multi-input unit installed on the body, at least a first display screen and a second display screen adapted to display predetermined menus and a controller adapted to respond to an input from the first multi-input unit to move and execute a first predetermined menu displayed on the first display screen and respond to an input from the second multi-input unit to move and execute a second predetermined menu displayed on the second display screen.

It is contemplated that the body includes a main body and a cover coupled to the main body and the first display screen is located on the main body and the second display screen is located on the cover. It is further contemplated that at least one of the first display screen and second display screen is divided into at least two portions.

It is contemplated that the second predetermined menu is a sub menu of the first predetermined menu. It is further contemplated that the body further includes a hinge adapted to couple the main body to the cover and the first multi-input unit and the second multi-input unit are located at opposite sides of the hinge.

It is contemplated that one of the first multi-input unit and the second multi-input unit is either a jog dial or a jog shuttle and the other of the first multi-input unit and the second multi-input unit is one of a jog dial, a jog shuttle, a multi-key, a side key and a navigation key. It is further contemplated that the body includes a main body and a cover coupled to the main body such that the mobile communication terminal has an open configuration and a closed configuration and the input from the first multi-input unit and the input from the second multi-input unit may be generated regardless of the open or closed configuration of the mobile communication terminal.

It is contemplated that at least one of the first display screen and the second display screen is an outer display screen located on an outer surface of the cover. It is further contemplated that the input from the first multi-input unit and the input from the second multi-input unit are related to one of character input, number input, setting time, setting a menu and changing a displayed background.

It is contemplated that the first display screen is located on an inner surface of the main body and the second display screen is located on an inner surface of the cover. It is further contemplated that the mobile communication terminal further includes a first identifier and a second identifier, the first identifier located either on a surface of the first multi input-unit or adjacent the first multi-input unit and the second identifier located either on a surface of the second multi-input unit or adjacent the second multi-input unit, and wherein the first identifier indicates that the first multi-input unit controls moving and executing the first predetermined menu displayed on the first display screen and the second identifier indicates that the second multi-input unit controls moving and executing the second predetermined menu displayed on the second display screen.

It is contemplated that at least one of the first display screen and the second display screen includes a touch screen. It is further contemplated that the mobile communication terminal further includes a camera and wherein the input from the first multi-input unit controls the moving and execution of a menu related to photographing an image and the input from the second multi-input unit controls the moving and execution of a menu related to storing, retrieving and deleting photographed images.

It is contemplated that the mobile communication terminal further includes a text input mode and wherein the input from the first multi-input unit selects a type of input character and the input from the second multi-input unit selects the input character. It is further contemplated that the mobile communication terminal further includes a multimedia mode and wherein the input from the first multi-input unit controls the moving and execution of a menu related to the selection and execution of a type of multimedia and the input from the second multi-input unit controls the moving and execution of a menu related to screen size, screen capture and volume level.

It is contemplated that the mobile communication terminal further includes a music replay mode and wherein the input from the first multi-input unit controls the moving and execution of a main menu and the input from the second multi-input unit controls at least one of volume and an equalizer. It is further contemplated that the mobile communication terminal further includes at least one of a menu view mode, a menu search mode and a message inquiry mode and wherein the input from the first multi-input unit controls the moving and selection of a main page or an upper directory and the input from the second multi-input unit controls the moving and selection of a detailed page or a lower directory.

It is contemplated that the first input is generated by rotation of the first multi-input unit and the second input is generated by rotation of the second multi-input unit. It is further contemplated that the first multi-input unit includes a first input button and the second multi-input unit includes a second input button and wherein the first input is generated by either rotation of the first multi-input unit or manipulation of the first input button and the second input is generated by either rotation of the second multi-input unit or manipulation of the second input button.

In another aspect of the present invention, a mobile communication terminal is provided. The mobile communication terminal includes a main body, a cover, a hinge adapted to couple the main body to the cover such that the mobile communication terminal has an open configuration and a closed configuration, a first multi-input unit and a second multi-input unit located at opposite sides of the hinge, at least a first display screen located on the main body and a second display screen located on the cover, the first display screen and second display screen adapted to display predetermined menus and a controller adapted to respond to an input from the first multi-input unit to move and execute a first predetermined menu displayed on the first display screen and respond to an input from the second multi-input unit to move and execute a second predetermined menu displayed on the second display screen, wherein the input from first multi-input unit and the input from the second multi-input unit may be generated regardless of the open or closed configuration of the mobile communication terminal.

Additional features and advantages of the invention will be set forth in the description which follows, and in part will be apparent from the description, or may be learned by practice of the invention. It is to be understood that both the foregoing general description and the following detailed description of the present invention are exemplary and explanatory and are intended to provide further explanation of the invention as claimed.

These and other embodiments will also become readily apparent to those skilled in the art from the following detailed description of the embodiments having reference to the attached figures, the invention not being limited to any particular embodiments disclosed.

### BRIEF DESCRIPTION OF THE DRAWINGS

The invention will be described in detail with reference to the following drawings in which like numerals refer to like elements. The accompany drawings, which are included to provide a further understanding of the invention and are incorporated in and constitute a part of this specification, illustrate embodiments of the invention and together with the description serve to explain the principles of the invention. In the drawings:
FIG. 1A is a perspective view illustrating a mobile communication terminal according to one embodiment of the present invention before it is opened.
FIG. 1B is a perspective view illustrating a mobile terminal according to one embodiment of the present invention after it is opened.
FIG. 2 is a system configuration of a mobile communication terminal according to one embodiment of the present invention.
FIGS. 3A to 3D are perspective views showing operational modes of a mobile communication terminal according to one embodiment of the present invention.
FIGS. 4A to 4C are additional perspective views showing operational modes of a mobile communication terminal according to one embodiment of the present invention.
FIG. 5 is a perspective view illustrating a mobile communication terminal according to another embodiment of the present invention after it is opened.

### DETAILED DESCRIPTION OF THE EMBODIMENTS

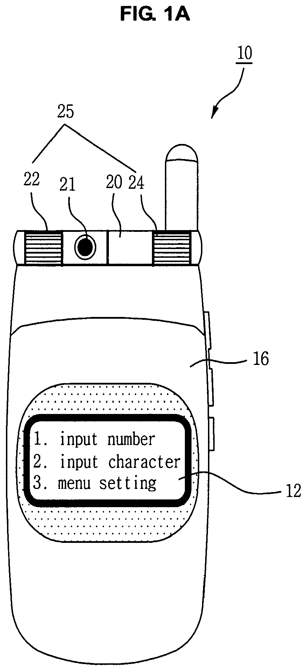

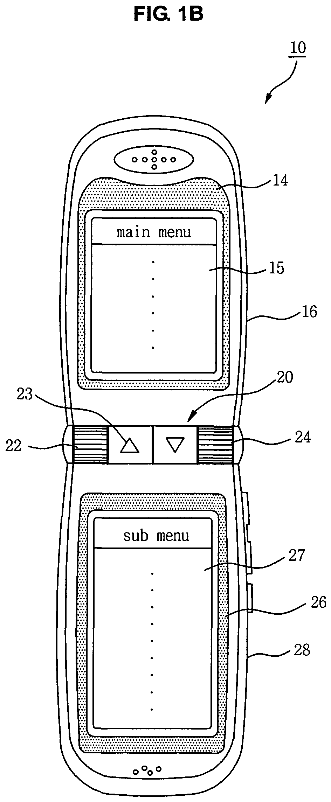

Embodiments of the present invention will be described in a more detailed manner with reference to the drawings. FIGS. 1A and 1B are perspective views illustrating a mobile communication terminal according to one embodiment of the present invention after it is, respectively, closed and opened.

As illustrated in FIGS. 1A and 1B, the mobile communication terminal 10 includes a cover 16, a hinge 20 and a main body 28.

The cover 16 includes an outer display screen 12 and a first inner display screen 14. The outer display screen 12 is formed on an outer surface of the cover 16. The first inner display screen 14 is formed on an inner surface of the cover 16.

The outer display screen 12 displays an image or information when the mobile communication terminal 10 is closed, with the cover 16 over the main body 28. The outer display screen 12 may be one of various display devices, such as a liquid crystal display LCD, an organic light emitting display OLED and a light emitting display LED.

The hinge 20 connects the cover 16 to the main body 28. A camera 21, a first jog dial 22 and a second jog dial 24 are installed in or on the hinge 20.

The main body 28 includes a second inner display screen 26. The second inner display screen 26 is formed on an inner surface of the main body 28.

The first inner display screen 14 and the second inner display screen 26 displays an image or information when the mobile communication terminal 10 is open, with the cover 16 pivotally rotated to expose the main body 28. The first inner display screen 14 and the second inner display screen 26 may be one of various display devices, such as a liquid crystal display LCD, an organic light emitting display (OLED) and a light emitting display (LED). Since the first inner display screen 14 and the second inner display screen 26 include, respectively, a first touch screen 15 and a second touch screen 27, they may perform an input function as well as display an image or information.

The first inner display screen 14 and the second inner display screen 26 display an image or information that are related or correspond to each other. For example, the first inner display screen 14 displays upper menus or main menus while the second inner display screen 26 displays lower menus or sub menus of the upper menus or the main menus displayed on the first inner display screen.

The main menu displayed on the first inner display screen 14 and the sub menu displayed on the second inner display screen 26 are related, for example, having an upper and lower relationship on the base of a tree structure of a menu designed by a user. For example, if the main menu is the uppermost menu, the sub menu may be the lower menu of the uppermost menu. On the other hand, if the sub menu is a list of performance data that is the lowermost menu, the main menu may be the upper menu for the list of performance data.

Typical menus displayed on the first inner display screen 14 and the second inner display screen 26 are illustrated in table 1.

Referring to FIGS. 1A and 1B, the camera 21 takes a picture of a subject and provides an image. The camera 21 may be operated regardless of whether the mobile communication terminal 10 is open or closed.

When the mobile communication terminal 10 is closed, the image photographed by the camera 21 is displayed on the outer display screen 12. When the mobile communication terminal 10 is open, the photographed image is displayed on the first inner display screen 14 or the second inner display screen 26.

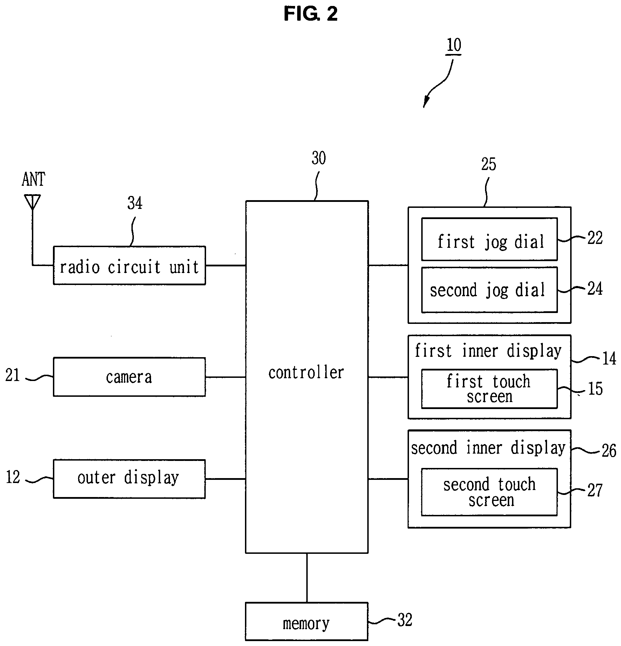

The first jog dial 22 and the second jog dial 24 are located at opposite ends of the hinge 20. The first jog dial 22 and the second jog dial 24 act as a multi-input unit or multi-input device 25 (refer to FIG. 2) in order to input at least two signals. The first jog dial 22 and the second jog dial 24 are exposed both when the mobile communication terminal 10 is closed, as illustrated in FIG. 1A and when the mobile communication terminal 10 is open, as illustrated in FIG. 1B.

**Table 1**

| | **First inner display screen** | **Second inner display screen** |
|---|---|---|
| **Menu** | Main menu | Detailed menu |
| | Detailed menu | List of performance Data |
| **Camera/Video mode** | Photographed image | Image processing menu |
| | Photography related menu | Control and edit menu |
| **Multimedia mode** | Selecting type of multimedia, such as TV, moving picture and execution | TV image and moving picture control menu, such as image size, image capture, volume control |
| **MP3 mode** | Basic menu | Volume or sound quality, such as volume, equalizer |
| **Document view or menu search, message inquiry** | Contents | Every page |
| | Previous page | Next page |
| **Directory** | Upper directory | Lower directory |

The first jog dial 22 and the second jog dial 24 may be used to perform a task, such as simple character input, input a telephone number, set time, set a menu, and change a background when the mobile communication terminal 10 is closed. Therefore, users may perform a simple manipulation, such as a telephone call or send a message, by using the first jog dial 22 and the second jog dial 24 when the mobile communication terminal 10 is closed.

When the mobile communication terminal is open, the first jog dial 22 and the second jog dial 24 may be used to execute and/or move a main menu that is displayed on the first inner display screen 14 and a sub menu that is displayed on the second inner display screen 26 according to their rotation. The first jog dial 22 and the second jog dial 24 are capable of multi-signal input regardless of whether the mobile communication terminal 10 is open or closed.

A user may manipulate the main menu displayed on the first inner display screen 14 and the second inner display screen 26 and the detailed menu by grasping the mobile communication terminal 10 with both hands and rotating the first jog dial 22 and the second jog dial 24 with the thumb of each hand, respectively.

An input button (not shown) that generates a specific input signal by a perpendicular input may be formed in the sides of the first jog dial 22 and the second jog dial 24. On the other hand, when the first jog dial 22 and the second jog dial 24 have elastic forces, a specific input signal may be generated by the perpendicular input. Menu or mode switching, detailed menu selection advancement or list selection advancement may be determined according to the perpendicular input.

Typical instructions related to moving and executing the main menu and the detailed menu displayed on the first inner display screen 14 and the second inner display screen 26 according to the first jog dial 22 and the second jog dial 24 are illustrated in table 2.

For example, in a camera/video mode, the image photographed by the camera 21 is displayed on the first inner display screen 14. When image processing menus are displayed on the second inner display screen 26, the first jog dial 22 is used to input a signal which causes a picture of the image displayed on the first inner display screen 14 to be taken and stored in a memory. The second jog dial 24 is used to input a signal for selecting image-processing menus related to storage, revival, deletion and video composition.

In a multimedia mode, the first jog dial 22 is used to select a menu related to selection and execution of a multimedia type, such as a TV image and moving picture. The second jog dial 24 may be used to select a detailed menu related to control of the TV image and moving picture, such as image size, image capture and volume level.

In a music replay mode, such as MP-3 file replay, the first jog dial 22 is used to select a main menu. The second jog dial 24 may be used control the volume or an equalizer.

**Table 2**

| | **First jog dial** | **Second jog dial** |
|---|---|---|
| **Menu** | Main menu | Detailed menu |
| | Detailed menu | List of performance Data |
| **Camera/Video mode** | Photographed image | Image processing menu |
| | Photography related menu | Control and edit menu |
| **Multimedia mode** | Selecting type of multimedia, such as TV, moving picture and execution | TV image and moving picture control menu, such as image size, image capture, volume control |
| **MP3 mode** | Basic menu | Volume or sound quality, such as volume, equalizer |
| **Document view or menu search, message inquiry** | Contents | Every page |
| | Previous page | Next page |
| **Directory** | Upper directory | Lower directory |

In a mode including a document view, menu search, and message inquiry, the first jog dial 22 is used to select a main page or an upper directory. The second jog dial 24 may be used to select a detailed page or a lower directory.

As illustrated in FIG. 1B, an identifier or a mark 23 showing a direction, such as "▲" or "▼", is printed on the first jog dial 22 and the second jog dial 24 in order to indicate that the first jog dial and the second jog dial are used to select which menu or the mode is displayed on the first inner display screen 14 and the second inner display screen 26. According to the identifier 23, a user knows how to move or execute the main menu displayed on the first inner display screen 14 using the first jog dial 22 and how to move the detailed menu displayed on the second inner display screen 26 using the second jog dial 24.

FIG. 2 illustrates a system configuration of a mobile communication terminal according to one embodiment of the present invention. As illustrated in FIG. 2, the mobile communication terminal 10 includes a controller 30 for controlling the overall operation of the mobile communication terminal, a radio circuit unit 34 sending and receiving a radio frequency signal through an antenna ANT and a memory 32 for storing various data or programs, as well as a multi-input unit 25 including the first jog dial 22 and second jog dial 24, the outer display screen 12, the first inner display screen 14, the second inner display screen 26, and the camera 21. The first inner display screen 14 and the second inner display screen 26 include, respectively, touch screens 15 and 27.

The detailed function or the operation will be omitted for those elements for which a detailed description has already been provided. The main function of the controller 30 will be illustrated in detail.

The controller 30 receives a multi-signal from the first jog dial 22 and the second jog dial 24. The controller 30 executes the corresponding input signals from the first jog dial 22 and the second jog dial 24. For example, the controller 30 controls moving or executing the main menu displayed on the first inner display screen 14 and the sub menu displayed on the second inner display screen 26 according to the first jog dial 22 and the second jog dial 24.

Furthermore, as illustrated in table 2 with respect to moving and executing according to a sequential rotational input or a perpendicularity input of the first jog dial 22 and the second jog dial 24, the controller 30 controls the execution of the multi-signal from the first jog dial and the second jog dial.

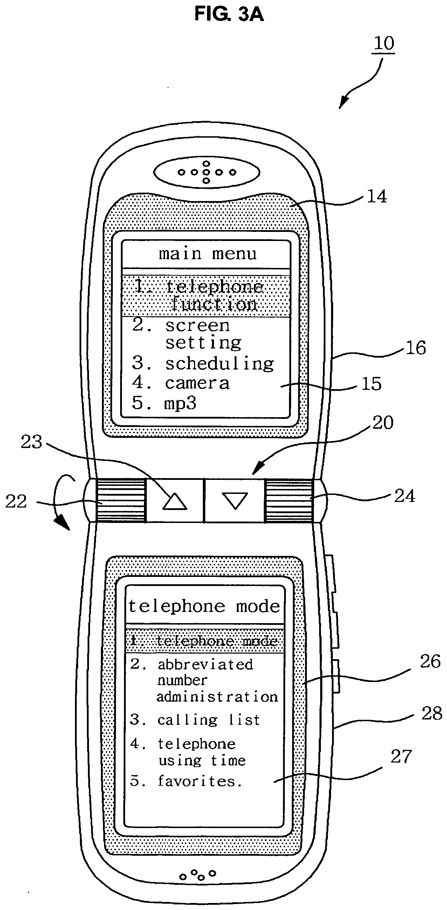

FIGS. 3A to 3D illustrate operation of a mobile communication terminal 10 according to one embodiment of the present invention. As illustrated in FIGS. 3A-3D, a user may select the main menu of the first inner display screen 14 and the detailed menu of the second inner display screen 26 by rotating the first jog dial 22 and the second jog dial 24 using the thumb of each hand.

As illustrated in FIG. 3A, the first inner display screen 14 displays the main menu of the mobile communication terminal 10 for a function, such as a telephone call, image setting, scheduling, camera or MP3, while the second inner display screen 26 displays the detailed menu of each main menu. For example, if the main menu is related to a telephone call, the second inner display screen 26 displays a detailed menu, such a the telephone directory, abbreviated number administration, a calling list, a telephone call timer or favorites. The first jog dial 22 moves or executes the main menu of the first inner display screen 14 according to its rotation while the second jog dial 24 moves or executes the detailed menu of the second inner display screen 26 under control of the controller 30 (see FIG. 2).

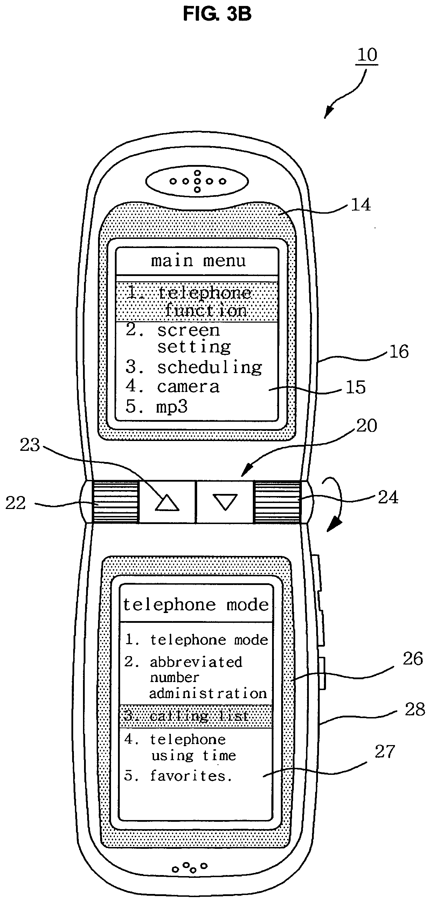

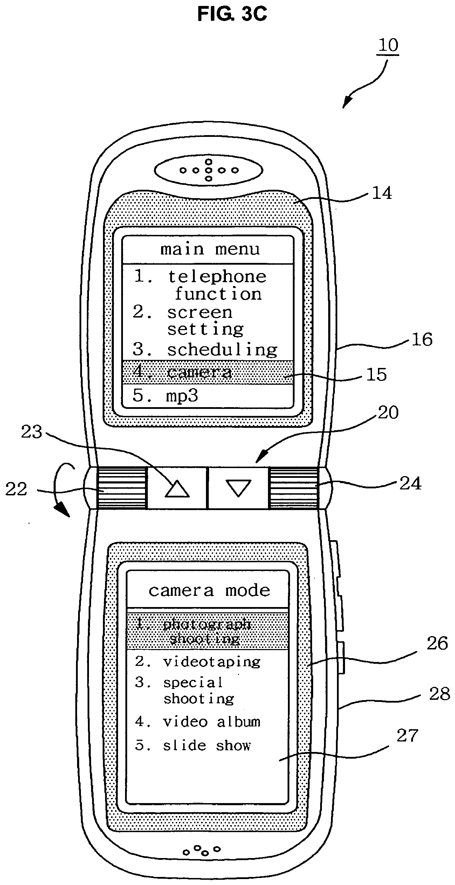

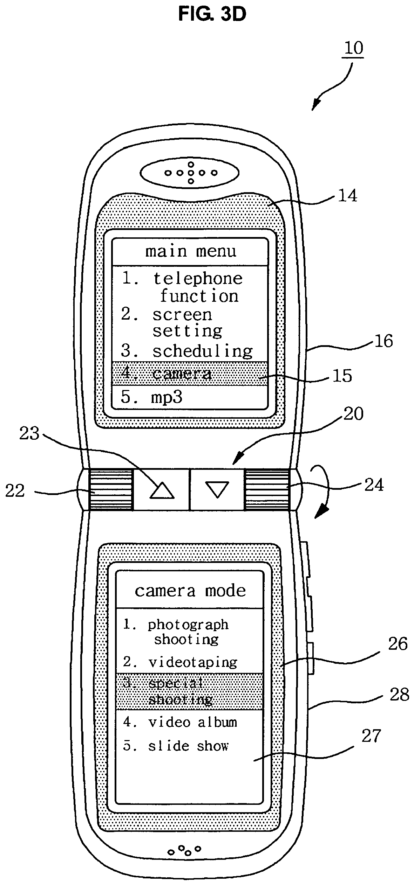

FIG. 3B illustrates the selection of a calling list by rotating the second jog dial 24 in a clockwise direction when a telephone function mode is selected on the main menu. FIG. 3C shows the selection of a camera function on the main menu by rotating the first jog dial 22 in a clockwise direction. FIG. 3D shows the selection of a special shooting mode by rotating the second jog dial 24 in a clockwise direction when the camera function is selected on the main menu.

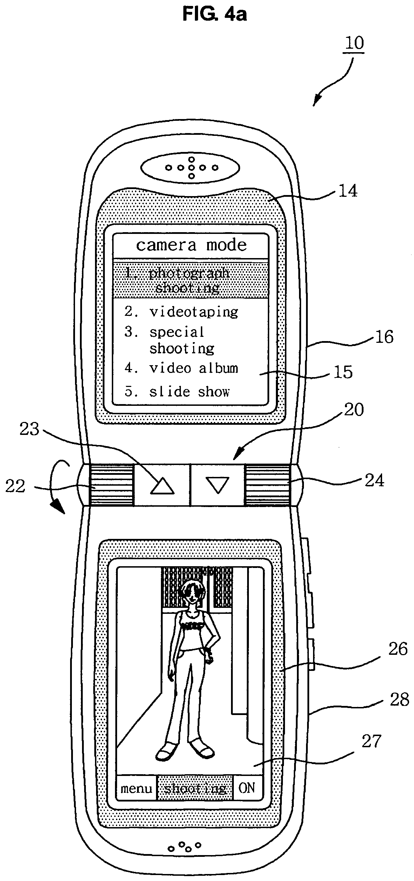

FIGS. 4A to 4C illustrate additional operations of a mobile communication terminal 10 according to one embodiment of the present invention. A user may select a detailed menu and a sub menu of the detailed menu or execute a function of the detailed menu by rotating the first jog dial 22 and the second jog dial 24 using the thumb of each hand.

As illustrated in FIG. 4A, the first inner display screen 14 displays the detailed menus of the selected camera mode, such as photograph shooting, videotaping, special shooting, video album and slide show. The second inner display screen 26 displays the execution screen of each detailed menu or the sub menu of the detailed menu.

The first jog dial 22 is used to select the detailed menu of the first inner display screen 14, while the second jog dial 24 is used to execute the detailed menu of the second inner display screen or select the sub menu of the detailed menu. The controller 30 controls execution or selection according to the rotation of the second jog dial 24.

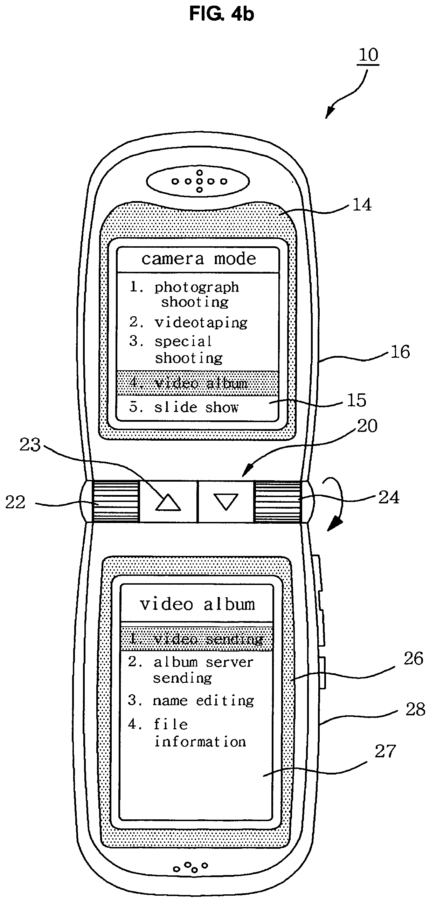

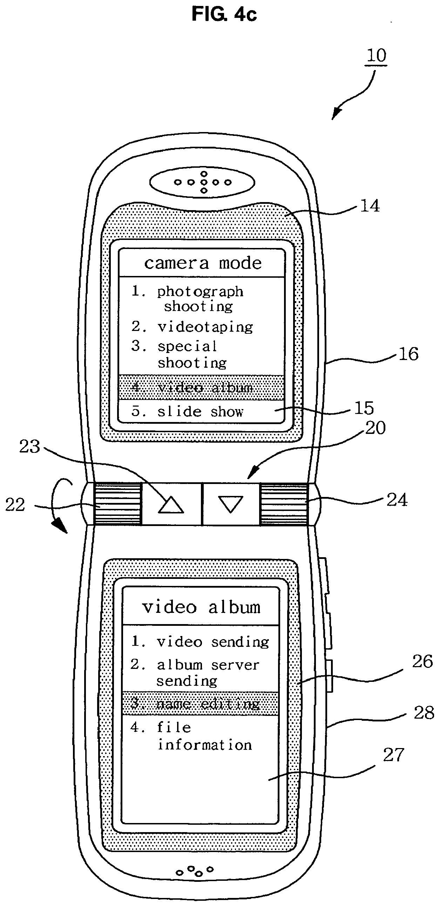

FIG. 4B illustrates selection of a video album by rotating the first jog dial 22 in a clockwise direction when the camera mode has been selected. FIG. 4C illustrates selection of a sub menu of the video album, such as video sending, album server sending and name editing, with the name editing sub menu selected by rotating the second jog dial 24 in a clockwise direction.

In the embodiment illustrated, the first jog dial 22 and second jog dial 24 are used to execute and move the main menu and the sub menu displayed on the first inner display screen 14 and the second inner display screen 26. However, at least one of the outer display screen 12, the first inner display screen 14 and the second inner display screen 26 may be divided into at lease two display portions in a widthwise or lengthwise configuration in order to display the main menu and sub menu respectively, as described in table 1.

The first jog dial 22 and the second jog dial 24 may also be used to move and execute the main menu and sub menu displayed on the divided display portion. Additionally, an input means or input method for moving or executing the main menu and sub menu of a specific display portion by the first jog dial 22 and the second jog dial 24 would also be provided.

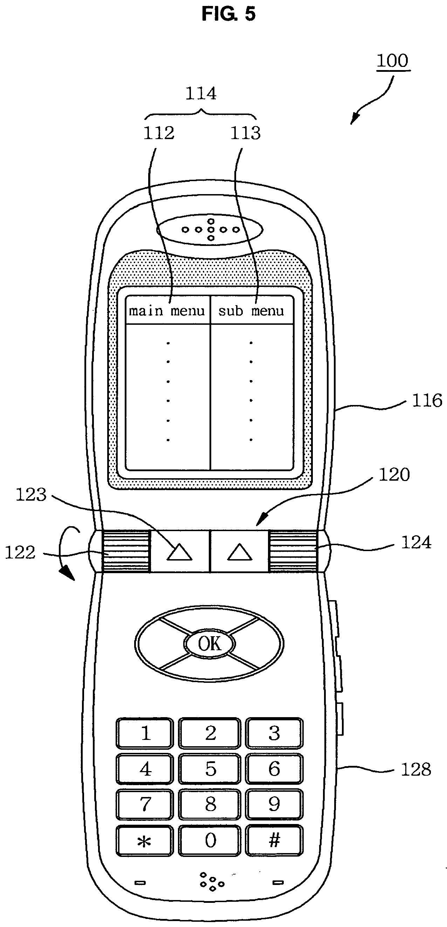

As illustrated in FIG. 5, a mobile communication terminal 100 according to another embodiment of the present invention includes a cover 116, a hinge 120 and a main body 128. The cover 116 includes one inner display screen 114 that is divided into two display screens 112 and 113.

Display screens 112 and 113 may display an image or information related to or corresponding to each other, as previously illustrated for display screens 14 and 26 of the first embodiment of the present invention in FIGS. 1A and 1B. For example, the first display screen 112 may display the main menu and the second display screen 113 may display the sub menu according to a tree structure.

The embodiments have been illustrated with regard to a mobile communication terminal used for telecommunication. However, the present invention may be applied to an image apparatus or sound apparatus, such as information electronic appliances or an MPEG-3 player, in addition to a mobile communication terminal. The present invention may be applied to any mobile terminal, such as a personal digital assistant (PDA), smart handheld device or MP-3 player.

The embodiments have been illustrated with regard to a mobile communication terminal in which a cover is connected to a main body about a rotation axis. However, the present invention is not limited to a single type or structure of mobile communication terminal and may be applied to a folder-type, swing-type, slide-type, flip-type, bar-type, or hinged-type mobile terminal.

The embodiments have been illustrated with regard to a mobile communication terminal with an outer display screen and first and second inner display screen. However, the present invention is not limited in this way. Only a portion of those elements may exist in the present invention or a touch screen may not be included in the present invention.

The embodiments have been illustrated with regard to a mobile communication terminal in which first and second jog dials are used to move and execute the main menu and the sub menu displayed on a first inner display screen and a second inner display screen. However, in the present invention, the first and the second jog dials may be used to move and execute the main menu and the sub menu or the upper menu and the lower menu regardless of the configuration of the display screens on which the main menu and sub menu are displayed. On the other hand, the first and the second jog dials may be used to move and execute the menu displayed on the first and the second inner display screen regardless of the relative position of the upper and lower menu.

The embodiments have been illustrated with regard to a mobile communication terminal in which the multi-input unit of the first and the second jog dials may be used to move and execute the menu. However, in the present invention, the first and the second jog dials may be used for document input.

For example, in a text input mode, while the first jog dial is rotated to select a Korean consonant, the second jog dial may be used to select a Korean vowel to complete the input of a Korean word. On the other hand, while the first jog dial selects Korean, the second jog dial may be used to select English in order to create a document in which Korean and English are mixed.

The embodiments have been illustrated with regard to a mobile communication terminal in which first and second jog dials generate signals related to a menu or document input. However, the first and the second jog dials may generate signals that move two points or a cursor displayed on a display screen. For example, in a mobile communication terminal that supports a multimedia game mode, the first and the second jog dials may simultaneously input multi-signals by generating moving signal for two points displayed on the display screen.

The embodiments have been illustrated with regard to a mobile communication terminal in which the jog dials are multi-input units. However, various jog devices, such as a jog shuttle, may be utilized in the present invention.

The embodiments have been illustrated with regard to a mobile communication terminal in which only the first and the second jog dials are multi-input units. However, input units such as a keypad, a side key, a navigation key, a multi-key and a joystick, may be used with the first and the second jog dials in order to input multi-signals.

For example, a jog dial or jog shuttle may be used with another jog dial or jog shuttle or with a multi-key, side key or navigation key. Furthermore, both devices may be positioned facing each other to input multi-signals.

The embodiments have been illustrated with regard to a mobile communication terminal in which an identifier or mark is formed on the hinge in order to indicate the display screen controlled by the first and the second jog dials. However, the identifier or mark may be printed on the first and second jog dials or may be temporarily displayed on the first inner display screen and the second inner display screen. Furthermore, different colors may be used for the first and the second jog dials in order to differentiate between the jog dial functions.

The embodiments have been illustrated with regard to a mobile communication terminal in which first and second jog dials are located at opposite ends of a hinge. However, the first and second jog dials may be located at opposite ends of the main body or the cover when they face each other.

The embodiments have been illustrated with regard to a mobile communication terminal in which specific menus are displayed on the outer display screen and the first inner display screen and second inner display screen. However, the present invention is not thus limited.

Particularly, with respect to the menu displayed on the first inner display screen and the second inner display screen, the sub menu or the lower menu may be displayed on the first inner display screen with the main menu or the upper menu displayed on the second inner display screen. Furthermore, switching of the relative display screens may be performed with an additional input means or an additional input method. Moreover, if the display screens are divided into portions as described herein, the same method may be used for the present invention.

The present invention allows a desired menu or mode to be easily and simply selected quickly by using two multi-input devices. Furthermore, the present invention facilitates multi-signal input regardless of whether the mobile communication terminal is open or closed. Moreover, various functions may be used when the mobile communication terminal is closed.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A mobile terminal (10) comprising:
a body;
a first multi-input unit (22) and a second multi-input unit (24) rotatively mounted on the body;
at least a first display screen (14) adapted to display a first predetermined menu and a second display screen (26) adapted to display a second predetermined menu, wherein the second predetermined menu is a sub menu corresponding to a selectable function in the first predetermined menu; and
a controller (30) adapted to:
move and execute the first predetermined menu displayed on the first display screen (14) in response to a first input from the first multi-input unit (22), and
move and execute the second predetermined menu displayed on the second display screen (26) in response to a second input from the second multi-input unit (24),
wherein the first input from the first multi-input unit (22) is generated by rotation of the first multi-input unit (22) and the second input from the second multi-input unit (24) is generated by rotation of the second multi-input unit (24);
wherein the body comprises:
a main body (28),
a cover (16) coupled to the main body (28), wherein the first display screen (14) is located on the cover (16) and the second display screen (26) is located on the main body (28), and
a hinge (20) adapted to couple the main body (28) to the cover (16), wherein the first multi-input unit (22) and the second multi-input unit (24) are located at opposite sides of the hinge (20).

2. The mobile communication terminal (10) of claim 1, wherein the first display screen (14) is one logically divided portion of a single physical display screen, and the second display screen (26) is another logically divided portion of the single physical display screen.

3. The mobile communication terminal (10) of claim 1, wherein one of the first multi-input unit (22) and the second multi-input unit (24) is either a jog dial or a jog shuttle and the other of the first multi-input unit (22) and the second multi-input unit (24) is one of a jog dial, a jog shuttle, a multi-key, a side key and a navigation key.

4. The mobile communication terminal (10) of claim 1, wherein the mobile communication terminal (10) has an open configuration and a closed configuration and the input from the first multi-input unit (22) and the input from the second multi-input unit (24) are generated regardless of the open or closed configuration of the mobile communication terminal (10).

5. The mobile communication terminal (10) of claim 4, wherein at least one of the first display screen (14) and the second display screen (26) comprises a display screen (12) located on an outer surface of the cover (16).

6. The mobile communication terminal (10) of claim 5, wherein the first input from the first multi-input unit (22) and the second input from the second multi-input unit (24) are related to character input, number input, setting time, setting a menu or changing a displayed background.

7. The mobile communication terminal (10) of claim 1, wherein the second display screen (26) is located on an inner surface of the main body (28) and the first display screen (14) is located on an inner surface of the cover (16).

8. The mobile communication terminal (10) of claim 1, further comprising a first identifier and a second identifier, the first identifier located either on a surface of the first multi input-unit (22) or adjacent the first multi-input unit (22) and the second identifier located either on a surface of the second multi-input unit (24) or adjacent the second multi-input unit (24), and wherein the first identifier is adapted to indicate that the first multi-input unit (22) controls moving and executing the first predetermined menu displayed on the first display screen (14) and the second identifier is adapted to indicate that the second multi-input unit (24) controls moving and executing the second predetermined menu displayed on the second display screen (26).

9. The mobile communication terminal (10) of claim 1, wherein at least one of the first display screen (14) and the second display screen (26) comprises a touch screen (15, 27).

10. The mobile communication terminal (10) of claim 1, further comprising a camera (21) and wherein the first input from the first multi-input unit (22) is adapted to control the moving and execution of a menu related to photographing an image and the second input from the second multi-input unit (24) is adapted to control the moving and execution of a menu related to storing, retrieving and deleting photographed images.

11. The mobile communication terminal (10) of claim 1, further comprising a text input mode and wherein the first input from the first multi-input unit (22) is adapted to select a type of input character and the second input from the second multi-input unit (24) is adapted to select the input character.

12. The mobile communication terminal (10) of claim 1, further comprising a multimedia mode and wherein the first input from the first multi-input unit (22) is adapted to control the moving and execution of a menu related to the selection and execution of a type of multimedia and the second input from the second multi-input unit (24) is adapted to control the moving and execution of a menu related to screen size, screen capture and volume level.

13. The mobile communication terminal (10) of claim 1, further comprising a music replay mode and wherein the first input from the first multi-input unit (22) is adapted to control the moving and execution of a main menu and the second input from the second multi-input unit (24) is adapted to control at least one of volume or an equalizer.

14. The mobile communication terminal (10) of claim 1, further comprising at least a menu view mode, a menu search mode or a message inquiry mode, wherein the first input from the first multi-input unit (22) is adapted to control the moving and selection of a main page or an upper directory and the second input from the second multi-input unit (24) is adapted to control the moving and selection of a detailed page or a lower directory.

15. The mobile communication terminal (10) of claim 1, wherein the first multi-input unit (22) comprises a first input button and the second multi-input unit (24) comprises a second input button and wherein the first input is generated by either rotation of the first multi-input unit (22) or manipulation of the first input button and the second input is generated by either rotation of the second multi-input unit (24) or manipulation of the second input button.

## Patentansprüche

1. Mobiles Endgerät (10), umfassend:
einen Körper;
eine erste Mehrfach-Eingabeeinheit (22) und eine zweite Mehrfach-Eingabeeinheit (24), die rotierbar an dem Körper angebracht sind;
wenigstens einen ersten Anzeigebildschirm (14), der zum Anzeigen eines ersten vorbestimmten Menüs eingerichtet ist, und einen zweiten Anzeigebildschirm (26), der zum Anzeigen eines zweiten vorbestimmten Menüs eingerichtet ist, wobei das zweite vorbestimmte Menü ein Untermenü ist, das ausführbaren Funktionen in dem ersten vorbestimmten Menü entspricht; und
eine Steuerung (30), eingerichtet zum:
Bewegen und Ausführen des auf dem ersten Anzeigebildschirm (14) angezeigten ersten vorbestimmten Menüs auf eine erste Eingabe von der ersten Mehrfach-Eingabeeinheit (22) hin, und
Bewegen und Ausführen des auf dem zweiten Anzeigebildschirm (26) angezeigten zweiten vorbestimmten Menüs auf eine zweite Eingabe von der zweiten Mehrfach-Eingabeeinheit (24) hin,
wobei die erste Eingabe von der ersten Mehrfach-Eingabeeinheit (22) durch eine Rotation der ersten Mehrfach-Eingabeeinheit (22) erzeugt wird und die zweite Eingabe von der zweiten Mehrfach-Eingabeeinheit (24) durch Rotation der zweiten Mehrfach-Eingabeeinheit (24) erzeugt wird;
wobei der Körper umfasst:
einen Hauptkörper (28),
eine an den Hauptkörper (28) gekoppelte Abdeckung (16), wobei der erste Anzeigebildschirm (14) auf der Abdeckung (16) befindlich ist und der zweite Anzeigebildschirm (26) auf dem Hauptkörper (28) befindlich ist, und
ein Gelenk (20), das zum Koppeln des Hauptkörpers (28) zu der Abdeckung (16) eingerichtet ist, wobei die erste Mehrfach-Eingabeeinheit (22) und die zweite Mehrfach-Eingabeeinheit (24) auf gegenüberliegenden Seiten des Gelenks (20) befindlich sind.

2. Mobiles Kommunikationsendgerät (10) nach Anspruch 1, wobei der erste Anzeigebildschirm (14) ein logisch aufgeteilter Anteil eines einzelnen physischen Anzeigebildschirms ist, und der zweite Anzeigebildschirm (26) ein anderer logisch aufgeteilter Anteil des einzelnen physischen Anzeigebildschirms ist.

3. Mobiles Kommunikationsendgerät (10) nach Anspruch 1, wobei eine von der ersten Mehrfach-Eingabeeinheit (22) und der zweiten Mehrfach-Eingabeeinheit (24) entweder ein Jog-Rad oder ein Jog-Shuttle und die andere von der ersten Mehrfach-Eingabeeinheit (22) und der zweiten Mehrfach-Eingabeeinheit (24) eines von einem Jog-Rad, einem Jog-Shuttle, einer Mehrfachtaste, einer Seitentaste und einer Navigationstaste ist.

4. Mobiles Kommunikationsendgerät (10) nach Anspruch 1, wobei das mobile Endgerät (10) eine offene Einstellung und eine geschlossene Einstellung aufweist und die Eingabe von der ersten Mehrfach-Eingabeeinheit (22) und die Eingabe von der zweiten Mehrfach-Eingabeeinheit (24) unabhängig von der geöffneten oder geschlossenen Einstellung des mobilen Kommunikationsendgeräts (10) erzeugt werden.

5. Mobiles Kommunikationsendgerät (10) nach Anspruch 4, wobei wenigstens einer von dem ersten Anzeigebildschirm (14) und dem zweiten Anzeigebildschirm (26) einen Anzeigebildschirm (12) umfasst, der sich an einer äußeren Oberfläche der Abdeckung (16) befindet.

6. Mobiles Kommunikationsendgerät (10) nach Anspruch 5, wobei die erste Eingabe von der ersten Mehrfach-Eingabeeinheit (22) und die zweite Eingabe von der zweiten Mehrfach-Eingabeeinheit (24) sich auf eine Zeicheneingabe, eine Zahleneingabe, eine Zeitfestlegung, eine Menüfestlegung oder ein Ändern eines angezeigten Hintergrunds beziehen.

7. Mobiles Kommunikationsendgerät (10) nach Anspruch 1, wobei der zweite Anzeigebildschirm (26) an einer inneren Oberfläche des Hauptkörpers (28) befindlich ist und der erste Anzeigebildschirm (14) an einer inneren Oberfläche der Abdeckung (16) befindlich ist.

8. Mobiles Kommunikationsendgerät (10) nach Anspruch 1, weiter umfassend einen ersten Identifikator und einen zweiten Identifikator, wobei der erste Identifikator entweder auf einer Oberfläche der ersten Mehrfach-Eingabeeinheit (22) oder neben der ersten Mehrfach-Eingabeeinheit (22) befindlich ist und der zweite Identifikator entweder auf einer Oberfläche der zweiten Mehrfach-Eingabeeinheit (24) oder neben der zweiten Mehrfach-Eingabeeinheit (24) befindlich ist, und wobei der erste Identifikator zum Hinweisen darauf eingerichtet ist, dass die erste Mehrfach-Eingabeeinheit (22) ein Bewegen und Ausführen des auf dem ersten Anzeigebildschirm (14) angezeigten ersten vorbestimmten Menüs steuert und der zweite Identifikator zum Hinweisen darauf eingerichtet ist, dass die zweite Mehrfach-Eingabeeinheit (24) ein Bewegen und Ausführen des auf dem zweiten Anzeigebildschirm (26) angezeigten zweiten vorbestimmten Menüs steuert.

9. Mobiles Kommunikationsendgerät (10) nach Anspruch 1, wobei wenigstens einer von dem ersten Anzeigebildschirm (14) und dem zweiten Anzeigebildschirm (26) einen berührungssensitiven Bildschirm (15, 27) umfasst.

10. Mobiles Kommunikationsendgerät (10) nach Anspruch 1, weiter umfassend eine Kamera (21), und wobei die erste Eingabe von der ersten Mehrfach-Eingabeeinheit (22) zum Steuern des Bewegens und Ausführens eines Menüs eingerichtet ist, dass sich auf ein Fotografieren eines Bildes bezieht, und die zweite Eingabe von der zweiten Mehrfach-Eingabeeinheit (24) zum Steuern des Bewegens und Ausführens eines Menüs eingerichtet ist, das sich auf ein Speichern, ein Erhalten und ein Löschen von fotografierten Bildern bezieht.

11. Mobiles Kommunikationsendgerät (10) nach Anspruch 1, weiter umfassend einen Texteingabemodus und wobei die erste Eingabe von der ersten Mehrfach-Eingabeeinheit (22) zum Auswählen eines Typs von Eingabezeichen eingerichtet ist und die zweite Eingabe von der zweiten Mehrfach-Eingabeeinheit (24) zum Auswählen des Eingabezeichens eingerichtet ist.

12. Mobiles Kommunikationsendgerät (10) nach Anspruch 1, weiter umfassend einen Multimedia-Modus, und wobei die erste Eingabe von der ersten Mehrfach-Eingabeeinheit (22) zum Steuern des Bewegens und Ausführens eines Menüs eingerichtet ist, das sich auf die Auswahl und Ausführung eines Typs von Multimedien bezieht, und die zweite Eingabe von der zweiten Mehrfach-Eingabeeinheit (24) zum Steuern des Bewegens und Ausführens eines Menüs eingerichtet ist, das sich auf die Bildschirmgröße, Bildschirmerfassung und Lautstärke bezieht.

13. Mobiles Kommunikationsendgerät (10) nach Anspruch 1, weiter umfassend einen Musikwiedergabemodus, und wobei die erste Eingabe von der ersten Mehrfach-Eingabeeinheit (22) zum Steuern des Bewegens und Ausführens eines Hauptmenüs eingerichtet ist und die zweite Eingabe von der zweiten Mehrfach-Eingabeeinheit (24) zum Steuern von wenigstens einem von einer Lautstärke oder einem Equalizer eingerichtet ist.

14. Mobiles Kommunikationsendgerät (10) nach Anspruch 1, weiter umfassend wenigstens einen Menübetrachtungsmodus, einen Menüsuchmodus oder einen Nachrichtenanfragemodus, wobei die erste Eingabe von der ersten Mehrfach-Eingabeeinheit (22) zum Steuern des Bewegens und Auswählens einer Hauptseite oder eines obersten Eintrags eingerichtet ist und die zweite Eingabe von der zweiten Mehrfach-Eingabeeinheit (24) zum Steuern des Bewegens und Auswählens einer detaillierten Seite oder eines niedrigeren Eintrags eingerichtet ist.

15. Mobiles Kommunikationsendgerät (10) nach Anspruch 1, wobei die erste Mehrfach-Eingabeeinheit (22) einen ersten Eingabeknopf umfasst und die zweite Mehrfach-Eingabeeinheit (24) einen zweiten Eingabeknopf umfasst, und wobei die erste Eingabe entweder durch eine Rotation der ersten Mehrfach-Eingabeeinheit (22) oder einer Manipulation des ersten Eingabeknopfs erzeugt wird und die zweite Eingabe entweder durch eine Rotation der zweiten Mehrfach-Eingabeeinheit (24) oder eine Manipulation des zweiten Eingabeknopfs erzeugt wird.

## Revendications

1. Terminal mobile (10) comprenant :
un corps ;
une première unité à entrées multiples (22) et une deuxième unité à entrées multiples (24) montées de manière rotative sur le corps ;
au moins un premier écran d'affichage (14) adapté pour afficher un premier menu prédéterminé et un deuxième écran d'affichage (26) adapté pour afficher un deuxième menu prédéterminé, dans lequel le deuxième menu prédéterminé est un sous-menu correspondant à une fonction sélectionnable dans le premier menu prédéterminé ; et
un contrôleur (30) adapté pour :
déplacer et exécuter le premier menu prédéterminé affiché sur le premier écran d'affichage (14) en réponse à une première entrée à partir de la première unité à entrées multiples (22), et
déplacer et exécuter le deuxième menu prédéterminé affiché sur le deuxième écran d'affichage (26) en réponse à une deuxième entrée à partir de la deuxième unité à entrées multiples (24),
dans lequel la première entrée à partir de la première unité à entrées multiples (22) est générée par la rotation de la première unité à entrées multiples (22) et la deuxième entrée à partir de la deuxième unité à entrées multiples (24) est générée par une rotation de la deuxième unité à entrées multiples (24) ;
dans lequel le corps comprend :
un corps principal (28),
un couvercle (16) couplé au corps principal (28), dans lequel le premier écran d'affichage (14) est placé sur le couvercle (16) et le deuxième écran d'affichage (26) est placé sur le corps principal (28), et
une charnière (20) adaptée pour coupler le corps principal (28) au couvercle (16), dans lequel la première unité à entrées multiples (22) et la deuxième unité à entrées multiples (24) sont placées au niveau des côtés opposés de la charnière (20).

2. Terminal (10) de communication mobile selon la revendication 1, dans lequel le premier écran d'affichage (14) est une partie logiquement divisée d'un écran d'affichage physique unique, et le deuxième écran d'affichage (26) est une autre partie logiquement divisée de l'écran d'affichage physique unique.

3. Terminal (10) de communication mobile selon la revendication 1, dans lequel l'une parmi la première unité à entrées multiples (22) et la deuxième unité à entrées multiples (24) est soit une molette « jog dial » soit une manette « jog shuttle » et l'autre parmi la première unité à entrées multiples (22) et la deuxième unité à entrées multiples (24) est l'une parmi une molette « jog dial », une manette « jog shuttle », une touche multifonction, une touche latérale et une touche de navigation.

4. Terminal (10) de communication mobile selon la revendication 1, dans lequel le terminal (10) de communication mobile présente une configuration ouverte et une configuration fermée et l'entrée à partir de la première unité à entrées multiples (22) et l'entrée à partir de la deuxième unité à entrées multiples (24) sont générées sans se soucier de la configuration ouverte ou fermée du terminal (10) de communication mobile.

5. Terminal (10) de communication mobile selon la revendication 4, dans lequel au moins l'un parmi le premier écran d'affichage (14) et le deuxième écran d'affichage (26) comprend un écran d'affichage (12) placé sur une surface externe du couvercle (16).

6. Terminal (10) de communication mobile selon la revendication 5, dans lequel la première entrée à partir de la première unité à entrées multiples (22) et la deuxième entrée à partir de la deuxième unité à entrées multiples (24) se rapportent à une entrée de caractère, une entrée de nombre, un réglage de l'heure, un réglage de menu ou un changement d'arrière-plan affiché.

7. Terminal (10) de communication mobile selon la revendication 1, dans lequel le deuxième écran d'affichage (26) est placé sur une surface interne du corps principal (28) et le premier écran d'affichage (14) est placé sur une surface interne du couvercle (16).

8. Terminal (10) de communication mobile selon la revendication 1, comprenant en outre un premier identificateur et un deuxième identificateur, le premier identificateur placé soit sur une surface de la première unité à entrées multiples (22) soit adjacent à la première unité à entrées multiples (22) et le deuxième identificateur placé soit sur une surface de la deuxième unité à entrées multiples (24) soit adjacent à la deuxième unité à entrées multiples (24), et dans lequel le premier identificateur est adapté pour indiquer que la première unité à entrées multiples (22) commande le déplacement et l'exécution du premier menu prédéterminé affiché sur le premier écran d'affichage (14) et le deuxième identificateur est adapté pour indiquer que la deuxième unité à entrées multiples (24) commande le déplacement et l'exécution du deuxième menu prédéterminé affiché sur le deuxième écran d'affichage (26).

9. Terminal (10) de communication mobile selon la revendication 1, dans lequel au moins l'un parmi le premier écran d'affichage (14) et le deuxième écran d'affichage (26) comprend un écran tactile (15, 27).

10. Terminal (10) de communication mobile selon la revendication 1, comprenant en outre une caméra (21) et dans lequel la première entrée à partir de la première unité à entrées multiples (22) est adaptée pour commander le déplacement et l'exécution d'un menu se rapportant à la photographie d'une image et la deuxième entrée à partir de la deuxième unité à entrées multiples (24) est adaptée pour commander le déplacement et l'exécution d'un menu se rapportant au stockage, à l'extraction et à l'effacement des images photographiées.

11. Terminal (10) de communication mobile selon la revendication 1, comprenant en outre un mode d'entrée de texte et dans lequel la première entrée à partir de la première unité à entrées multiples (22) est adaptée pour sélectionner un type de caractère d'entrée et la deuxième entrée à partir de la deuxième unité à entrées multiples (24) est adaptée pour sélectionner le caractère d'entrée.

12. Terminal (10) de communication mobile selon la revendication 1, comprenant en outre un mode multimédia et dans lequel la première entrée à partir de la première unité à entrées multiples (22) est adaptée pour commander le déplacement et l'exécution d'un menu se rapportant à la sélection et à l'exécution d'un type de multimédia et la deuxième entrée à partir de la deuxième unité à entrées multiples (24) est adaptée pour commander le déplacement et l'exécution d'un menu se rapportant à une taille d'écran, à une capture d'écran et à un niveau de volume.

13. Terminal (10) de communication mobile selon la revendication 1, comprenant en outre un mode de lecture de musique et dans lequel la première entrée à partir de la première unité à entrées multiples (22) est adaptée pour commander le déplacement et l'exécution d'un menu principal et la deuxième entrée à partir de la deuxième unité à entrées multiples (24) est adaptée pour commander au moins l'un parmi un volume et un égaliseur.

14. Terminal (10) de communication mobile selon la revendication 1, comprenant en outre au moins un mode de visualisation de menu, un mode de recherche de menu ou un mode de recherche de message, dans lequel la première entrée à partir de la première unité à entrées multiples (22) est adaptée pour commander le déplacement et la sélection d'une page principale ou d'un répertoire de niveau supérieur et la deuxième entrée à partir de la deuxième unité à entrées multiples (24) est adaptée pour commander le déplacement et la sélection d'une page détaillée ou d'un répertoire de niveau inférieur.

15. Terminal (10) de communication mobile selon la revendication 1, dans lequel la première unité à entrées multiples (22) comprend un premier bouton d'entrée et la deuxième unité à entrées multiples (24) comprend un deuxième bouton d'entrée et dans lequel la première entrée est générée soit par la rotation de la première unité à entrées multiples (22) soit par la manipulation du premier bouton d'entrée et la deuxième entrée est générée soit par la rotation de la deuxième unité à entrées multiples (24) soit par la manipulation du deuxième bouton d'entrée.
